(19) Europäisches Patentamt
European Patent Office
Office européen des brevets

(11) **EP 2 168 816 A1**

(12) **EUROPÄISCHE PATENTANMELDUNG**

(43) Veröffentlichungstag:
**31.03.2010 Patentblatt 2010/13**

(51) Int Cl.:
***B60R 13/10*** *(2006.01)*   ***G09F 13/22*** *(2006.01)*

(21) Anmeldenummer: **08017215.8**

(22) Anmeldetag: **30.09.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder:
 • **Sauer, Arno Martin**
  **83471 Berchtesgaden (DE)**
 • **Moderegger, Bernd**
  **83471 Berchtesgaden (DE)**
 • **Sievers, Jörg**
  **30966 Hemmingen (DE)**
 • **TESA SE**
  **20253 Hamburg (DE)**

(72) Erfinder:
 • **Sauer, Arno Martin**
  **83471 Berchtesgaden (DE)**

 • **Moderegger, Bernd**
  **83471 Berchtesgaden (DE)**
 • **Sievers, Jörg**
  **30966 Hemmingen (DE)**
 • **Klier, Daniel**
  **21465 Reinbek (DE)**
 • **Bunde, Bernd**
  **20253 Hamburg (DE)**
 • **Domann, Frank**
  **25436 Uetersen (DE)**

(74) Vertreter: **Hartz, Nikolai**
 **Wächtershäuser & Hartz**
 **Patentanwälte**
 **Weinstrasse 8**
 **80333 München (DE)**

(54) **Prägfähiges Kennzeichenschild**

(57) Die vorliegende Erfindung betrifft ein prägfähiges Kennzeichenschild, umfassend eine elektrisch leitende Platte mit einer Beschichtung, die eine mit einem elektrolumineszenzfähigen Füllstoff gefüllte Haftklebemasse umfasst, die mit einer elektrisch leitfähigen transparenten Folie zumindest teilweise bedeckt ist, wobei die Platte und die elektrisch leitfähige transparente Folie zur Erzeugung von Elektrolumineszenz der gefüllten Haftklebemasse als Elektroden dienen können.

Figur 1

EP 2 168 816 A1

**Beschreibung**

Gebiet der Erfindung

Die vorliegende Erfindung betrifft ein selbstleuchtendes, prägfähiges Kennzeichenschild sowie ein Verfahren zur Herstellung eines selbstleuchtenden, prägfähigen Kennzeichenschildes. Kennzeichenschilder der Erfindung können mit Hilfe von herkömmlichen Prägemaschinen beschriftet werden und lassen sich aus Rollenware herstellen.

Stand der Technik

Kennzeichenschilder, insbesondere für Kraftfahrzeuge, dienen zur normierten Individualisierung von Kraftfahrzeugen. Entsprechend existieren einerseits strenge Vorgaben an die technischen Merkmale von Kennzeichen, und andererseits existieren Dienstleister mit etablierten Prägeverfahren, die herkömmliche normierte Schilderplatinen beschriften.

Selbstleuchtende Kennzeichenschilder sind bekannt. Insbesondere wurde versucht elektrolumineszierende selbstleuchtende Kennzeichenschilder bereitzustellen. Zu diesem Zweck wurden Trägerplatten beispielsweise mit einem aufwändigen Schichtenaufbau versehen (DE 102 47 708). Aus der EP 1 863 674 ist ein Kennzeichenschild bekannt, das mit einer eine elektrolumineszierende Beschichtung aufweisenden Folie ausgestattet ist. Es ist zwar möglich, das aus der EP 1 863 674 bekannte Schild in einer herkömmlichen Prägemaschine zu beschriften. Der Herstellungsprozess ist jedoch mit Nachteilen behaftet, weil die elektrolumineszierende Folie in einem getrennten Schritt hergestellt und zugeschnitten wird und erst anschließend auf der Trägerplatte befestigt wird.

Es ist daher Aufgabe der vorliegenden Erfindung, ein prägfähiges selbstleuchtendes Kennzeichenschild bereitzustellen, das einfach herzustellen ist, widerstandsfähig insbesondre im Hinblick auf den Prägeprozess ist, und das in einem Schritt aus Rollenware bereitgestellt werden kann.

Diese Aufgabe wird mit einem Prägfähigen Kennzeichenschild gelöst, das eine elektrisch leitende Platte umfasst mit einer Beschichtung, die eine mit einem elektrolumineszenzfähigen Füllstoff gefüllte Haftklebemasse umfasst, die mit einer elektrisch leitfähigen transparenten Folie zumindest teilweise bedeckt ist, wobei die Platte und die elektrisch leitfähige transparente Folie zur Erzeugung von Elektrolumineszenz der gefüllten Haftklebemasse als Elektroden dienen können.

Das prägfähige Kennzeichenschild kann hergestellt werden mit einem Verfahren, das folgende Schritte umfasst:

(a) Bereitstellen einer elektrisch leitenden Platte
(b) Beschichtung der elektrisch leitenden Platte mit einer mit einem elektrolumineszenzfähigen Füllstoff gefüllten Haftklebemasse, und
(c) Bedeckung der Haftklebemasse zumindest teilweise mit einer elektrisch leitfähigen transparenten Folie.

Das prägfähige Kennzeichenschildes kann in einem herkömmlichen Verfahren zum Prägen eines Kennzeichens für ein Kraftfahrzeug verwendet werden.

Beschreibung der Zeichnungen

Figur 1 zeigt einen Querschnitt durch eine erste Ausführungsform eines erfindungsgemäßen Kennzeichenschilds, das eine elektrisch leitfähige Metallplatte verwendet.

Figur 2 zeigt einen Querschnitt durch eine weitere Ausführungsform der Erfindung, die eine mit einer leitfähigen Beschichtung beschichtete nichtleitende Platte verwendet.

Figur 3 zeigt schematisch eine vorteilhafte Ausführungsform des Herstellungsprozesses eines erfindungsgemäßen Kennzeichenschildes.

Detaillierte Beschreibung der Erfindung

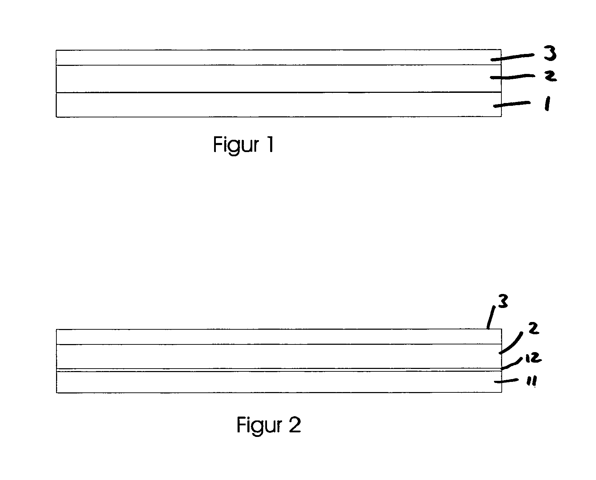

Figur 1 zeigt einen Querschnitt durch eine erste Ausführungsform eines erfindungsgemäßen Kennzeichenschilds. Das Kennzeichenschild umfasst eine elektrisch leitfähige Platte 1 mit einer Beschichtung 2, die eine mit einem elektrolumineszenzfähigen Füllstoff gefüllte Haftklebemasse umfasst, und die mit einer elektrisch leitfähigen transparenten Folie 3 bedeckt ist. Die Folie 3 kann retroreflektierend sein oder mit einer retroreflektierenden Folie (nicht gezeigt) bedeckt sein. Die Platte und die elektrisch leitfähige transparente Folie dienen bei der Erzeugung von Elektrolumineszenz der gefüllten Haftklebemasse als Elektroden.

Figur 2 zeigt einen Querschnitt durch eine weitere Ausführungsform der Erfindung, die eine mit einer leitfähigen Beschichtung beschichtete nichtleitende Platte verwendet. In diesem Fall besteht die elektrisch leitfähige Platte 1 aus einer Trägerplatte 11 und einer elektrisch leitenden Schicht 12, auf der eine Beschichtung 2 vorliegt, die eine mit einem elektrolumineszenzfähigen Füllstoff gefüllte Haftklebemasse umfasst, und die mit einer elektrisch leitfähigen transparenten Folie 3 bedeckt ist. Die Folie 3 kann retroreflektierend sein oder mit einer retroreflektierenden Folie (nicht gezeigt) bedeckt sein.

Das prägfähige Kennzeichenschild der Erfindung umfasst eine elektrisch leitende Platte. Die Platte kann aus einem elektrisch leitenden Material bestehen. Vorzugsweise ist das elektrisch leitende Material ein Metall. Beispiele für Metalle sind Aluminium, Eisen, Kupfer, Stahl, Zink oder Legierungen dieser Metalle. Besonders bevorzugt ist eine Aluminiumplatte, wie Sie herkömmlicherweise für Kennzeichenschilder verwendet wird. Eine Solche Platte weist die erforderlichen mechanischen Eigenschaften auf, die für die Durchführung eines Prägeverfahrens in einer herkömmlichen Prägemaschine erforderlich sind.

Soweit ein den elektrischen Strom nicht leitendes Material verwendet wird, oder ein leitendes Material vorliegt, das mit einer nicht leitenden Beschichtung versehen ist, muss dieses mit einer Beschichtung versehen werden, damit eine elektrisch leitfähige Platte im Sinne der Erfindung vorliegt, die als Elektrode zur Erzeugung von Elektrolumineszenz dienen kann. Eine solche Beschichtung kann beispielsweise eine metallische Beschichtung, oder eine Beschichtung aus einem leitfähigen Polymeren oder aus Metalloxid sein. Eine metallische Beschichtung kann beispielsweise Kupfer, Silber, Gold oder Legierungen daraus enthalten. Eine Beschichtung aus leitfähigen Polymeren kann Polymere enthalten, die aufgrund der Polymerstruktur elektrisch leitfähig sind oder es kann eine Polymermatrix vorliegen, in der leitfähige Füllstoffe dispergiert sind. Eine Beschichtung aus Metalloxid kann beispielsweise AZO (Aluminium-Zink-Oxid), ITO (Indium-Zinn-Oxid), FTO (Fluor-Zinn-Oxid), ATO (Antimon-Zinn-Oxid) enthalten.

Die elektrisch leitfähige Platte ist mit einer Beschichtung beschichtet, die eine mit einem elektrolumineszenzfähigen Füllstoff gefüllte Haftklebemasse umfasst.

Eine erfindungsgemäß verwendete Haftklebemasse enthält zumindest einen elektrolumineszenzfähigen Füllstoff. Als "elektrolumineszenzfähiger Füllstoff" werden im Sinne der Erfindung chemische Substanzen bezeichnet, die geeignet sind in einem elektrischen Wechselfeld Licht mit einer Wellenlänge von 400 bis 800 nm zu emittieren.

Die Haftklebemasse dient einerseits dem Zusammenhalt der Elektrodenschichten aufgrund von Klebkraft und Kohäsion. Andererseits dient die Haftklebemasse durch die Fähigkeit Licht zu emittieren und die Bereitstellung eines Dielektrikums zwischen zwei leitfähigen Schichten den Selbstleuchteigenschaften eines erfindungsgemäßen Kennzeichenschildes.

Damit erübrigt sich die getrennte Herstellung einer Folie mit einer elektrolumineszierenden Beschichtung, die in einem weiteren Schritt auf eine Trägerplatte geklebt wird. Daher kann der Aufbau derartiger Kennzeichenschilder gegenüber herkömmlichen selbstleuchtenden Kennzeichenschildern drastisch vereinfacht werden. Es ist nunmehr erstmals möglich Kennzeichenschilder in einem kontinuierlichen Verfahren herzustellen, wobei die Elektroden als Rollenware zugeführt werden und mit der erfindungsgemäßen Haftklebemasse verbunden werden, die gleichzeitig als Dielektrikum und Matrix für den elektrolumineszfähigen Füllstoff dient.

Als elektrolumineszenzfähige Füllstoffe können insbesondere Elektrolumineszenzpigmente eingesetzt werden, wie beispielsweise Produkte der Bezeichnung "GlacierGLO®" der Firma OSRAM Sylvania, die in Farben wie blau, blau-grün, grün, orange und weiß erhältlich sind. Die Beschichtung enthält ein oder mehrere Pigmente, die unter Einwirkung eines elektrischen Wechselspannungsfeldes lumineszieren. Elektrolumineszenzfähige Füllstoffe werden im allgemeinen auf Basis von ZnS, CdS, $Zn_xCd_{1-x}S$, bzw. Verbindungen der II und VI Gruppe des Periodensystems hergestellt, die üblicherweise mit Cu, Mn, oder Ag, dotiert bzw. aktiviert werden.

Als Matrix für die erfindungsgemäß eingesetzten gefüllten Haftklebemassen, können prinzipiell herkömmliche ungefüllte Haftklebemassen ausgewählt werden, insbesondere solche mit hydrophoben und/oder unpolaren Eigenschaften.

Beispielhaft verwiesen wird hier auf Haftklebemassen auf Polyacrylatbasis (einschließlich polymethacrylatbasierende Massen), Polysiloxanbasis, Natur- oder Synthesekautschukbasis und/oder Polyurethanbasis. Geeignete Haftklebemassen sind auch solche auf Blockcopolymerbasis, wie beispielsweise Acrylatblockcopolymerhaftklebemassen und/oder Styrolblockcopolymerhaftklebemassen.

In einer bevorzugten Ausführungsform der Erfindung ist die Haftklebemasse vernetzt. Die Vernetzung kann chemisch oder physikalisch erfolgen. Durch die Vernetzung wird eine höhere Kohäsion und eine größere Wärmestabilität der Haftklebemasse erzielt, wodurch sich diese insbesondere auch für den Einsatz als dünne Schicht und bei hohen Spannungen eignet.

Die Vernetzung der Haftklebemasse ist abhängig vom verwendeten Massesystem und kann durch die üblichen, dem Fachmann bekannten Verfahren erfolgen. Haftklebemassen auf Polyacrylatbasis können beispielsweise durch den Zusatz von thermischen Vernetzern, wie z.B. Metallchelate, Aluminium- oder Titanchelate, multifunktionelle Isocyanate, multifunktionelle Amine, multifunktionelle Alkohole oder multifunktionelle Epoxide vernetzt werden. Alternativ oder ergänzend kann die Vernetzung beispielsweise auch durch den Einsatz von UV-absorbierenden Photoinitiatoren und anschließende UV-Bestrahlung, oder durch Elektronenstrahlen erfolgen.

Haftklebemassen auf Blockcopolymerbasis vernetzen bevorzugt physikalisch über die Ausbildung von sogenannten Hartblockdomänen. Bezüglich der Vernetzung von Acrylat-Blockcopolymeren wird insbesondere auf den Offenbarungsgehalt der DE 101 29 608 A1 verwiesen.

Silikonhaftklebemassen werden bevorzugt durch Kondensationsvernetzung, Additionsvernetzung, Platin-Katalyse oder radikalisch durch Zusatz von Peroxiden vernetzt. Auch hier kann alternativ oder ergänzend durch UV-Bestrahlung oder durch Elektronenstrahlen vernetzt werden. Durch die Vernetzung der Haftklebemasse ist es insbesondere möglich, Haftklebemassen mit einem hohen elastischen Anteil (gemäß Mikroschertest) zu erzielen.

Ein zusätzlicher Vernetzer ist insbesondere dann nicht wesentlich, wenn eine ausreichende Vernetzung durch die Leuchtpartikel selbst hervorgerufen wird. Dieser Vorteil kann durch die Ausnutzung sämtlicher bekannter chemischer und physikalischer Wechselwirkungen zwischen Matrix und EL-Partikeln, wie z.B. ionische Wechselwirkungen, kovalente Wechselwirkungen, Van der Waals Wechselwirkungen oder Dipol-Dipol-Wechselwirkungen, erzielt werden.

Die Vernetzende Wirkung der EL-Partikel kann gegebenenfalls verstärkt werden, wenn oberflächenaktive Zusatzmittel in die Haftklebemasse gemischt werden, die sowohl mit der Haftklebemasse, als auch mit der Oberfläche der EL-Partikel wechselwirken. Derartige Zusatzmittel können auch die Dispergierung der EL-Partikel in der Haftklebemasse unterstützen.

Als besonders geeignet hat sich dabei trotz reduzierter Klebkraft ein elastischer Anteil von mindestens 30 %, insbesondere 40% gezeigt. Bevorzugt beträgt der elastische Anteil mindestens 50 %, weiter bevorzugt mindestens 60 %.

Die Haftklebemasse sollte jedenfalls im sichtbaren Bereich im Wesentlichen transparent sein. Alternativ kann vorgesehen sein, dass die Transparenz der Haftklebemasse, insbesondere sofern sie entsprechende Zusätze (Optische Aufheller, Farbpigmente) enthält, herabgesetzt ist.

Eine besonders bevorzugte Ausführungsform der Erfindung betrifft eine mit elektrolumineszenzfähigen Füllstoffen versehene Haftklebemasse, die ihrerseits vorzugsweise ein Polymer aus einer Monomermischung umfasst, die in Bezug auf die Monomermischung

(a) einen überwiegenden Anteil, insbesondere 70 bis 99,9 Gew.-% eines oder mehrerer Acrylsäureester und/oder Methacrylsäureester mit der Formel $CH_2=CH(R^3)(COOR^4)$, wobei der Rest $R^3$ die Substituenten H und/oder Methyl (-$CH_3$) darstellt und der Rest $R^4$ Alkylketten mit 4 bis 14 C-Atomen darstellt; und
(b) 0,1 bis 30 Gew.-%, bevorzugt 0,5 bis 10 Gew.-% eines oder mehrerer olefinisch ungesättigter Monomere mit funktionellen Gruppen, insbesondere mit funktionellen Gruppen, die eine Vernetzung eingehen können, wie Acrylsäure, Methacrylsäure, Hydroxyethylacrylat, Glycidylacrylat, Glycidylmethacrylat oder copolymerisierbare Photoinitiatoren, umfasst.

Zusätzlich kann die Haftklebemasse eine oder mehrere Komponenten c) umfassen, die zusammen mit den anderen Komponenten copolymerisiert werden. Die Comonomere der Komponente (c) können bis zu 40 Gew.-% der Monomermischung ausmachen.

Bevorzugt sind die Anteile der entsprechenden Komponeten a, b, und c derart gewählt, dass das Copolymer eine Glasübergangstemperatur (Tg) < 15°C aufweist. Die Monomere werden bevorzugt derart ausgewählt, dass die resultierenden Polymere bei Raumtemperatur als Haftklebemassen eingesetzt werden können, insbesondere derart, dass die resultierenden Polymere haftklebrige Eigenschaften entsprechend des "Handbook of Pressure Sensitive Adhesive Technology" von Donatas Satas (van Nostrand, New York 1989, Seite 444 - 514) besitzen.

Die Glasübergangstemperatur der der Haftklebemassen zugrunde liegenden Polymere liegt vorteilhaft unterhalb 15 °C im Sinne einer dynamischen Glasübergangstemperatur für amorphe Systeme und der Schmelztemperatur für semikristalline Systeme verstanden, die durch dynamisch mechanische Analyse (DMA) bei geringen Frequenzen bestimmt werden können.

Die Steuerung der gewünschten Glasübergangstemperatur kann durch die Anwendung der Gleichung

$$\frac{1}{T_G} = \sum_n \frac{w_n}{T_{G,n}}$$

$$(G1)$$

in Analogie zur Fox-Gleichung (vgl. T.G. Fox, Bull. Am. Phys. Soc. 1 (1956) 123) bei der Zusammenstellung der Monomermischung, welche der Polymerisation zugrunde liegt, erzielt werden.

In der Gleichung (G1 ) repräsentiert n die Laufzahl über die eingesetzten Monomere, Wn den Massenanteil des jeweiligen Monomers n (Gew.-%) und $T_{G,n}$ die jeweilige Glasübergangstemperatur des Homopolymers aus den jeweiligen Monomeren n in K.

Die Monomere der Komponente (a) sind vorzugsweise weichmachende und/oder unpolare Monomere. Ihre Zusammensetzung in der Monomermischung wird derart gewählt, dass die resultierenden Polymere bei Raumtemperatur oder höheren Temperaturen als Haftklebemassen eingesetzt werden können, also derart, dass die resultierenden Polymere haftklebrige Eigenschaften besitzen.

Vorzugsweise werden für die Monomere (a) Acrylmonomere eingesetzt, die Acryl und Methacrylsäureester mit Alkylgruppen, bestehend aus 4 bis 14 C-Atomen, bevorzugt 4 bis 9 C-Atomen, umfassen.

Spezifische Beispiele, ohne sich durch diese Aufzählung einschränken zu wollen, sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmeth-acrylat, n-Nonylacrylat, Isobutylacrylat, Isooctylacrylat, Isooctylmethacrylat, und deren verzweigten Isomere, wie z. B. 2-Ethylhexylacrylat, 2-Ethylhexylmethacrylat.

Die Monomere der Komponente (b) sind insbesondere olefinische ungesättigter Monomere (b) mit funktionellen Gruppen, insbesondere mit funktionellen Gruppen, die eine Vernetzung eingehen können. Die Vernetzung kann durch Reaktion der funktionellen Gruppen mit sich selbst, anderen funktionellen Gruppen oder nach Zusatz eines geeigneten Vernetzungsagents erfolgen.

Bevorzugt werden für die Monomere (b) Monomere mit folgenden funktionellen Gruppen eingesetzt: Hydroxy-, Carboxy-, Epoxy-, Säureamid-, Isocyanatooder Aminogruppen. Insbesondere bevorzugt sind Monomere mit Carbonsäure, Sulfonsäure-, oder Phosphonsäuregruppen.

Besonders bevorzugte Beispiele für die Komponente (b) sind Acrylsäure, Methacrylsäure, Itaconsäure, Maliensäure, Fumarsäure, Crotonsäure, Aconitsäure, Dimethylacrylsäure, ss-Acryloyloxypropionsäure, Trichloracrylsäure, Vinylessigsäure, Vinylphosphonsäure, Hydroxyethylacrylat, Hydroxypropylacrylat, Hydroxyethylmethacrylat, Hydroxypropylmethacrylat, Allylalkohol, Glycidylacrylat, Glycidylmethacrylat, 6-Hydroxyhexylmethacrylat, N-Methylolmethacrylamid, N-(Buthoxymethyl)methacrylamid, N-Methylolacrylamid, N-(Ethoxymethyl)acrylamid, wobei diese Aufzählung nicht abschliessend ist.

Bevorzugte Monomere (b) können auch funktionelle Gruppen enthalten, die eine nachfolgende strahlenchemische Vernetzung (z: B. Elektronenstrahlen, UV) oder über Peroxide unterstützen. Geeignete copolymerisierbare Photoinitiatoren sind beispielsweise Benzoinacrylat und acrylatfunktionalisierte Benzophenonderivate. Monomere, die eine Vernetzung durch Elektronenbestrahlung oder Peroxide unterstützen sind, z.B. Tetrahydrofufurylacrylat, N-tert. Butylacrylamid, Allylacrylat wobei diese Aufzählung nicht abschliessend ist.

Prinzipiell können im Sinne der Komponente (c) alle vinylisch-funktionalisierten Verbindungen eingesetzt werden, die mit der Komponente (a) und/oder der Komponente (b) copolymerisierbar sind, und können auch zur Einstellung der Eigenschaften der resultierenden Haftklebemasse dienen.

Bevorzugte Monomere (c) sind, wobei diese Aufzählung nicht abschliessend ist, z.B. Methylacrylat, Ethylacrylat, Propylacrylat, Methylmethacrylat, Ethylmethacrylat, Benzylacrylat, Benzylmethacrylat, tert.-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, , Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, S.S.[delta]-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, Dimethylaminopropylacrylamid, Dimethylaminopropylmethacrylamid, N-(1 -MethylundecylJ-acrylamid, N-(Buthoxymethyl)methacrylamid, N-(Ethoxy-methyl)acrylamid, N-(n-Octadecyl)acrylamid, weiterhin N, N-Dialkylsubstituierte Amide, wie beispielsweise N,N-Dimethylacrylamid, N,N-Dimethylmethylmethacrylamid, N-Benzyl-acrylamide, N-Isopropylacrylamid, N-tert.-Butylacrylamid, N-tertOctylacrylamid, 2-Butoxyethylacrylat, 2-Butoxy-ethylmethacrylat, 3-Methoxyacrylsäuremethylester, 3-Methoxybutylacrylat, Phenoxy-ethylacrlylat, Phenoxyethylmethacrylat, 2-Phenoxyethylmethacrylat, Butyldiglykolmethacrylat, Ethylenglycolacrylat, Ethylenglycolmonomethylacrylate, Methoxy Polyethylenglykol-methacrylat 350, Methoxy Polyethylenglykolmethacrylat 500, Propyleneglycolmono-methacrylat, Butoxydiethylenglykolmethacrylat, Ethoxytriethylenglykolmethacrylat, Octa-fluoropentylacrylat, Octafluoropentylmethacrylat, 2,2,2-Trifluoroethylmethacrylat, 1 ,1 , 1 ,3,3,3-Hexafluoroisopropylacrylat, 1 ,1 ,1 ,3,3,3-Hexafluoroisopropylmethacrylat, 2,2,3,3,3Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8, 8,8-Pentadecafluorooctylmethacrylat.

Acrylnitril, Methacrylnitril, Vinylmethylether, Ethylvinylether, Vinylisobutylether, Vinylacetat, Vinylchlorid, Vinylhalogenide, Vinylidenchlorid, Vinylidenhalogenide, Vinylpyridin, 4-Vinylpyridin, N-Vinylphthalimid, Styrol, aund p-Methylstyrol, a-Butylstyrol, 4-nButylstyrol, 4-n-Decylstyrol, 3,4-Dimethoxystyrol, N-Vinyllactam, N-Vinylpyrrolidon, Die Vernetzung findet erst nach dem Beschichten statt, da ein vernetztes Polymer nicht mehr oder nur eingeschränkt fließfähig ist. Dazu kann das Vernetzungsagens entweder vor der Beschichtung zugesetzt werden oder die Vernetzung kann nachträglich erzielt werden. Bekannte Vernetzungsverfahren sind die Zugabe von Radikalstartern, insbesondere Dibenzoylperoxid, Cumolhydroperoxid, Cyclohexanonperoxid,

Di-t-butylperoxid, Cyclohexylsulfonylacetylperoxid, Diisopropylpercarbonat, t-Butylperoktoat, oder Benzpinacol direkt vor dem Verstreichen. Diese erzeugen statistisch Radikale in den Hauptketten der Polymere, die zum Teil unter Rekombination Vernetzungspunkte bilden. Sofern reaktive Gruppen wie Acrylsäureoder Hydroxyfunktionen vorhanden sind kann mit mehrfunktionellen Isocyanaten vernetzt werden, zum Beispiel 4,4'-Diphenylmethanduesocyanat (MDI), Hexamethylenduesocyanat (HDI), Toluolduesocyanat (TDI) oder Isophoronduesocyanat (IPDI). Auch mehrfunktionelle Epoxidvernetzer sind geeignete Vernetzungsreagenzien. Beispiele geeigneter multifunktioneller Epoxide sind 1,4-Butandioldiglycidether, Polyglycerol-3-Glycidether, Cyclohexan-dimethanoldiglycidether, Glycerintriglycidether, Neopentylglykol-diglycidether, Pentaerythrittetraglycidether, 1,6-Hexandioldiglycidether), Polypropylen-glykoldiglycidether, Trimethylolpropantriglycidether, Bisphenol-A-Diglycidether und Bisphenol-F-Diglycidether.

Ebenfalls möglich ist die Vernetzung mit Glycidylmethycrylat als Comonomer des Acrylsäureesterpolymerisats, einer eingebauten Epoxidfunktion, die sich mit Hydroxyfunktionen oder Acrylsäure unter Netzwerkbildung umsetzt. Die Vernetzung über Epoxide kann durch Anwesenheit eines Katalysators, z.B. Lewis-Säuren wie Zinkchlorid beschleunigt werden.

Sehr verbreitet ist die Vernetzung mit Metallchelaten, zum Beispiel Aluminiumacetylacetonat oder Alkoholaten wie Titanalkoholaten (zum Beispiel Titantetrabutanolat). Diese setzen stets Acrylsäure als Comonomer voraus, die mit den mehrwertigen Metallionen Carboxylate bildet.

Werden der elektrolumineszierenden Haftklebemasse UV-absorbierende Photoinitiatoren vor der Beschichtung zugesetzt oder sind copolymerisierbare Photoinitiatoren einpolymerisiert, dann kann auch durch Bestrahlung mit UV-Licht vernetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon, 2,2-Dimethoxy-2-phenyl-1-phenylethanon, Dimethoxyhydroxy-acetophenon, substituierte [alpha]-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(Oethoxycarbonyl)oxim. Eine Vernetzungsmethode, die ohne Vernetzungschemikalien auskommt, ist die Behandlung mit Elektronenstrahlen, die ähnlich den Radikalbildnern statistisch Radikale entlang der Polymerhauptketten erzeugt, die unter Netzwerkbildung zum Teil rekombinieren. Verbessert werden kann die Wirksamkeit der Vernetzung durch UV-Licht und Elektronenbestrahlung durch Zugabe von Promotoren, in der Regel mehrfunktionelle Acrylate. Die ge-nannten Vernetzungsmechanismen können auch kom-biniert werden.

Der Vernetzeranteil bzw. die Dosis - im Falle von UV- oder Elektronenstrahlvernetzung - wird derart gewählt, dass ein elastischer Anteil der vernetzten Haftklebemassen von mindestens 40 % resultiert. Bevorzugt beträgt der elastische Anteil mindestens 50 %, weiter bevorzugt mindestens 60 %. Um einen derartigen elastischen Anteil zu erreichen beträgt der Vernetzeranteil vorzugsweise 0,1 Gew.-% bis 3 Gew.-%, weiter vorzugsweise 02, Gew.-% bis 2 Gew.-%, ganz bevorzugt 0,3 Gew.-% bis 1 Gew.-%.

Man kann den durch das Verfahren erhältlichen Polyacrylaten vor der thermischen Vernetzung zumindest ein klebrigmachendes Harz beimischen. Als zuzusetzende klebrigmachende Harze sind die vorbekannten und in der Literatur beschriebenen Klebharze einsetzbar. Bevorzugt lassen sich Pinen-, Inden- und Kolophoniumharze einsetzen, deren disproportionierte, hydrierte, polymerisierte, veresterte Derivate und Salze, die aliphati-schen und aromatischen Kohlenwasserstoffharze, Ter-penharze und Terpenphenolharze sowie C5-, C9- und andere Kohlenwasserstoffharze. Auch Kombinationen dieser und weiterer Harze können vorteilhaft eingesetzt werden, um die Eigenschaften der resultierenden Klebmasse wunschgemäß einzustellen. Im Allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. In einer besonders bevorzugten Vorgehensweise werden Terpenphenolharze und/oder Kolophoniumester hinzugesetzt.

Den Haftklebemassen können optional Weich-macher (Plastifizierungsmittel, wie beispielsweise Phos-phate, Phthalate, Citrate), weitere Füllstoffe (wie z. B. organische und/oder anorganische Nanopartikel, Fasern, Zinkoxid, Kreide, Volloder Hohlglaskugeln, Mikrokugeln aus anderen Materialien, Kieselsäure, Silikate, organische nachwachsende Rohstoffe wie z.B. Holzmehl, Keimbildner, thermisch leitfähige Materialien (wie z.B. Bornitrid, Aluminiumoxid, Siliciumcarbid), Blähmit-tel, Compoundierungsmittel und/oder Alterungsschutz-mittel (z.B. in Form von primären und sekundären Antioxidantien) und/oder Lichtschutzmittel zugesetzt sein.

Die Herstellung der Haftklebemassen kann nach den dem Fachmann geläufigen Verfahren geschehen, insbesondere vorteilhaft durch konventionelle radikalische Polymerisationen oder kontrollierte radikalische Polymerisationen.

Die Polyacrylate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert.

Vorzugsweise werden die neuen Copolymerisate durch Polymerisation der Monomeren in Lösungsmitteln, insbesondere in Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Prinzipiell eignen sich alle für Acrylate dem Fachmann geläufigen, üblichen Initiatoren.

Beispiele für Radikalquellen sind Peroxide, Hydroperoxide und Azoverbindungen, z.B. Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. In einer sehr bevorzugten Vorgehensweise wird als radikalischer Initiator 2,2'-azobis(2-methylbutyronitril) (Vazo 67(TM) der Fa. DuPont) oder Azodiisobutyronitril (AIBN) verwendet. Als Lösungsmittel kommen insbesondere Alkohole, wie Methanol, Ethanol, n-und iso-Propanol, n-und iso-Butanol, vorzugsweise Isopropanol und/oder Isobutanol; sowie Kohlenwasserstoffe wie Toluol und insbesondere Benzine eines Siedebereichs von 60 bis 120 °C in Frage. Ferner können Ketone, wie Aceton, Methylethylketon, Methylisobutylketon und Ester, wie Essigsäureethylester sowie Gemische von Lösungsmitteln der genannten Art eingesetzt werden, wobei Gemische, die Isopropanol und/oder Isobutanol in Mengen von 3 bis 10 Gew.-%, bezogen auf das eingesetzte Lösungsgemisch, enthal-

Die mittleren Molekulargewichte Mw der bei der mit den elektrolumineszenzfähigen Zusätzen additivierten Polyacrylathaftklebemassen liegen sehr bevorzugt in einem Bereich von 20.000 bis 2.000.000 g/mol; für die weitere Verwendung als Schmelzhaftkleber bevorzugt in einem Bereich von 100.000 bis 500.000 g/mol [Die Angaben des mittleren Molekulargewichtes Mw und der Polydisperistät PD in dieser Schrift beziehen sich auf die Bestimmung per Gelpermeationschromatographie. Die Bestimmung erfolgt an 100 $\mu$m klarfiltrierter Probe (Probenkonzentration 4 g/). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$m, $10^3$ Å, ID 8,0 mm x 50 mm verwendet. Zur Auftrenn ung werden die Säulen des Typs PSS-SDV, 5 $\mu$m, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71 ). Die Durchflussmenge beträgt 1 , 0 ml pro Minute. Die Kalibrierung erfolgt gegen PMMAStandards (Polymethylmethacrylat-Kalibrierung)].

Für die erfindungsgemässe Weiterverarbeitung besonders geeignet sind auch Polyacrylate, die eine enge Molekulargewichtsverteilung (Polydispersität < 4) haben. Diese Massen werden bei relativ niedrigem Molekulargewicht nach dem Vernetzen besonders scherfest. Eng verteilte Polyacrylate können durch anionische Polymerisation oder durch kontrollierte radikalische Polymerisationsmethoden hergestellt werden, wobei letzteres besonders gut geeignet ist. Beispiele sind in US 6,765,078 B2 und DE 10036901 A1 bzw. US 2004/0092685 A1 beschrieben. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Agoder Au-Komplexe (EP O 824 111 A1 ; EP 826 698 A1 ; EP 824 110 A1 ; EP 841 346 A1 ; EP 850 957 A1 ) eingesetzt werden. Die unterschiedlichen Möglichkeiten der ATRP sind ferner in den Schriften US 5,945,491 A, US 5,854,364 A und US 5,789,487 A beschrieben. In einer weiteren sehr vorteilhaften Ausführungsform der Erfindung ist die Basishaftklebemasse eine solche auf Silikonbasis, und zwar insbesondere eine Haftklebemasse, die chemisch oder physikalisch vernetzt ist. Insbesondere durch eine radikalische Vernetzung kann die zeitabhängige Alterung der Silikonhaftklebemasse, widergespiegelt durch steigende Kohäsion sowie verminderte Adhäsion, signifikant reduziert werden. Eine radikalische Vernetzung kann dabei vorteilhaft chemisch durch den Einsatz von BPO-Derivaten (Benzoylperoxid-Derivaten) und/oder durch den Einsatz von Elektronenstrahlen durchgeführt werden.

Sehr vorteilhaft weist die Silikonhaftklebemasse eine hohe Haftung auf unpolaren Substraten und Silikonkautschuken und/oder -schäumen sowie auf silikonisierten und/oder silikonhaltigen Untergründen auf. Besonders bevorzugt wird die Vernetzung der Silikonhaftklebeschicht mittels Elektronenbestrahlung bewirkt (Elektronenstrahlhärtung, ESH). Insbesondere die Vernetzung mittels ESH führt in nicht erwarteter Weise zu zwei unmittelbar miteinander verbundenen Vorteilen. Die durch die ESH erzeugten Radikale führen einerseits zu einer Vernetzung der Silikonhaftklebemasse und zum anderen zur Bildung eines festen Verbundes der Haftklebemasse mit dem entsprechenden (unpolaren) Untergrund, auf dem sie verklebt wird, beispielsweise einer PET-Folie. Eine mögliche Migration von weich machenden Reagenzien im Klebeverbund und damit eine Veränderung der Eigenschaften wird somit deutlich erschwert, womit die Haftklebemasse ihre Temperaturstabilität beibehält.

Als Silikonhaftklebemassen können erfindungsgemäß vorteilhaft kondensationsvernetzende Systeme umfassend Silikatharze und Polydimethyloder Polydiphenylsiloxane zum Einsatz kommen, weiterhin ebenfalls vorteilhaft additionsvernetzende Systeme umfassend Silikatharze, Polydimethyloder Polydiphenylsiloxane und Crosslinker (Vernetzersubstanzen, insbesondere funktionalisierte Hydrosilane). Einige kommerziell erhältliche Beispiele für erfindungsgemäß hervorragend einsetzbare Silikonhaftklebemassen sind, ohne durch die Aufzählung den Gegenstand der Erfindung beschränken zu wollen:

Kondensationsvernetzende Systeme: DC 280, DC 282, Q2-7735, DC 7358, Q2-7406 von Dow Corning, PSA 750, PSA 518, PSA 910 von GE Bayer Silikones, KRT 001 , KRT 002, KRT 003 von ShinEtsu, PSA 45559 von Wacker Silikones sowie PSA 400 von Rhodia; additionsvernetzende Systeme: DC 7657, DC 2013 von Dow Corning, PSA 6574 von GE Bayer Silikones sowie KR 3700, KR 3701 von ShinEtsu.

Die Elektrolumineszenz-Zusätze können bereits im Lösemittelprozess, vorzugsweise unter Einsatz möglichst wasserfreier Lösemittel, in die zu polymerisierende Eduktmischung oder in die noch in Lösung befindliche Haftklebemasse eingegeben werden. Die derart erhaltene mit den Elektrolumineszenz-Zusätzen modifizierte Haftklebemasse kann dann direkt aus der Lösung auf ein temporäres oder verbleibendes (permanentes) Trägermaterial aufgetragen werden. Anschließend werden die Lösemittel durch Trocknung entfernt. Bevorzugt erfolgt die Trocknung bei 60 - 160°C, sehr bevorzugt bei 80 - 120 °C. Bei thermischer Vernetzung wird neben der Entfernung der Lösemittel auch die Vernetzungsreaktion durchgeführt.

Die Elektrolumineszenz-Zusätze können in alternativer Vorgehensweise auch im Heißschmelzprozess ("Hotmelt-Prozess") homogen in die Haftklebemasse in der Schmelze eingearbeitet werden. Dazu werden bevorzugt die Lösemittel in einem Aufkonzentrationsextruder entfernt und im lösemittelfreien oder lösungsmittelarmen Zustand Elektrolumineszenzpigmente zucompoundiert. Anschließend kann die Haftklebemasse zur Herstellung von Haftklebebändern dann aus der Schmelze auf einen temporären oder verbleibenden Träger beschichtet werden, bevorzugt mittels Walzenoder Extrusionsverfahren. Es wird beispielsweise bei 140 °C mittels eines Beschichtungsextruders beschichtet, vorteilhaft wird die Masse danach durch Elektronenbestrahlung oder UV-Bestrahlung vernetzt.

Die Menge an vorteilhaft beigemischten elektrolumineszenzfähigen Zusätzen wird nach oben durch die klebtechnischen Anforderungen der Haftklebemasse beschränkt, also dadurch, dass die Haftklebemasse auf Grund des hohen Füllgrades nicht mehr klebt. Es hat sich herausgestellt, dass Proben mit Füllgraden bis über 50 Gew.-%, bezogen auf die mit den Zusätzen versehene Haftklebemasse, immer noch hervorragende haftklebrige Eigenschaften aufweisen. Die Menge an elektrolumineszenzfähigen Zusätzen wird daher vorteilhaft mit bis zu 80 Gew.-%, bezogen auf die mit den Zusätzen versehene Haftklebemasse, gewählt, sehr vorteilhaft mit bis zu 70 Gew.-%, besonders vorteilhaft mit bis zu 60 Gew.-%

Es hat sich gezeigt, dass der Anteil der elektrolumineszenzfähigen Zusatzstoffe in der Haftklebemasse bezogen auf die mit den Zusatzstoffen versehene Haftklebemasse, mindestens 25 Gew.-%, vorzugsweise mindestens 37,5 Gew.-%, weiter vorzugsweise mindestens 50 Gew.-%, betragen sollte, um eine möglichst hohe Leuchtkraft erzielen zu können. Unerwarteter Weise kann trotz eines derart hohen Anteils der elektrolumineszenzfähigen Zusatzstoffe noch eine ausreichende Klebkraft beibehalten werden.

Insbesondere für eine hohe Langzeitstabilität der Haftklebemasse und damit verbunden eine geringe Schwankung der Leuchtintensität über die Zeit, ist ein Schutz der elektrolumineszenzfähigen Zusatzstoffe vor Feuchtigkeit notwendig. In bevorzugter Ausgestaltung ist der elektrolumineszenzfähige Zusatzstoff daher gekapselt, d.h. er weist eine äußere Schutzhülle zum Schutz vor Feuchtigkeit auf. In bevorzugter Ausgestaltung beträgt die maximale Abweichung der Beleuchtungsstärke bei längerer Lagerung, d.h. bei einer Lagerung von mindestens 3 Wochen, nicht mehr als +- 20 %, vorzugsweise nicht mehr als +- 10 %, weiter vorzugsweise nicht mehr als +- 5 %.

Die erreichbaren Beleuchtungsstärken sind abhängig vom verwendeten Pigment, der angelegten Spannung und der Frequenz (die Wahl der Frequenz ändert zusätzlich das Lichtspektrum / die "Farbtemperatur") sowie weiterhin von der Art der Haftklebemasse. In bevorzugter Ausgestaltung ist vorgesehen, dass die minimale Beleuchtungstärke bei einer Spannung von 200 V und einer Frequenz von 700 Hz mindestens 15 lx, vorzugsweise mindestens 30 lx, weiter vorzugsweise mindestens 70 lx, beträgt.

Besonders Vorteilhaft ist eine elektroluminescierende Haftklebemasse, deren Durchschlagsspannung bei einer Schichtdicke von 50$\mu$ mindestens 80 V, besonders vorteilhaft mindestens 200 V, vorzugsweise mindestens 250 V beträgt.

Es kann weiterhin von Vorteil sein, der Haftklebemasse außerdem optische Aufheller beizumischen. Vorteilhaft werden die Aufheller mit einem Füllgrad von bis zu 5 Gew.-% zu der Haftklebemasse zugesetzt. Durch den Einsatz optischer Aufheller lässt sich das optische Erscheinungsbild verbessern (gleichmäßigeres Leuchtbild). In günstiger Vorgehensweise kann hierdurch die für eine bestimmte Beleuchtungsstärke notwendige Menge an elektrolumineszenzfähigen Zusätzen durch Substitution mit oftmals kostengünstigeren Additiven verringert werden. Als optische Aufheller können insbesondere Stilben-, Ethylen-, Coumarin-, Naphtalimid oder Pyrazolderivate verwendet werden. Diese können der Haftklebemasse in reiner Form oder als Mischung verschiedener optischer Aufheller zugesetzt werden.

Als "optische Aufheller" werden Stoffe bzw. Stoffgemische bezeichnet, die im UV-Bereich Licht absorbieren und im sichtbaren Bereich, vorzugsweise im Bereich von etwa 400 nm bis etwa 500 nm, eine Fluoreszenzemission haben. Diese Emission überdeckt eine in dem Bereich auftretende Absorption, so dass insgesamt in dem Bereich mehr Licht reflektiert wird (normale Reflexion + Fluoreszenzlicht). Die Materialien mit derartigen optischen Aufhellern erscheinen heller.

Alternativ oder zusätzlich zu den optischen Aufhellern können der Haftklebemasse auch Farbpigmente beigemischt werden. Die Farbpigmente absorbieren Licht bestimmter Wellenlänge und können somit als Filter für entsprechende Wellenlängen eingesetzt werden. Zudem können die Farbpigmente als Streuzentren für Licht dienen und somit zu einem gleichmäßigeren Leuchtbild beitragen. Der Füllgrad der Farbpigmente beträgt vorzugsweise bis zu 5 Gew.-%. Auch die Farbpigmente dienen der Verbesserung des optischen Erscheinungsbilds (gleichmäßigeres Leuchtbild). Als Farbpigmente können insbesondere Azopigmente, Mineralfarbpigmente oder Teefarbpigmente sowie Mischungen von verschiedener Farbpigmenten verwendet werden. Geeignete Farbpigmente sind insbesondere Zinkoxid, Titandioxid, Siliziumdioxid und/oder Zirkoniumdioxid.

In bevorzugter Ausgestaltung liegt die Schichtdicke einer erfindungsgemäßen Haftklebeschicht zwischen 20 $\mu$m und 200 $\mu$m, vorzugsweise zwischen 40 $\mu$m und 100 $\mu$m. In diesem Bereich der Schichtdicke lassen sich mit Spannungen, wie sie in den Bordnetzen üblich sind, gute Werte für die Leuchtstärke erzielen, ohne dass die Haftklebeschicht dabei zu warm und dadurch bezüglich ihrer Haltbarkeit beeinträchtigt wird.

Die mit einem elektrolumineszenzfähigen Füllstoff gefüllte Haftklebemasse ist mit einer elektrisch leitfähigen transparenten Folie zumindest teilweise bedeckt ist, wobei die Platte und die elektrisch leitfähige transparente Folie zur Erzeugung von Elektrolumineszenz der gefüllten Haftklebemasse als Elektroden dienen können. Eine elektrisch leitfähige transparenten Folie kann eine transparente Folie sein, die mit einer elektrisch leitenden Beschichtung versehen ist. Die entsprechende Beschichtung mit leitfähigen Eigenschaften kann beispielsweise durch Metallisierung (z.B. durch Besputterung) geschehen. Eine weiter vorteilhafte Vorgehensweise ist die Einbringung für sichtbares Licht transparenter, elektrisch leitfähiger Schichten oder Beschichtungen, zum Beispiel von ITO oder FTO-Schichten bzw. Beschichtungen (ITO = Indiumzinnoxid, FTO = Fluordotiertes Zinnoxid). Die vorgenannten Materialien haben den Vorteil, gleichzeitig transparent und elektrisch leitfähig zu sein. Gleichzeitig haben diese Schichten ein hohes Infrarotreflexionsvermögen.

In einer besonders vorteilhaften Ausführung ist sowohl die transparente leitfähige Folie, als auch die leitfähige Beschichtung flexibel und tiefziehfähig. Bekannte leitfähige Beschichtungen haben oft den Nachteil, dass die leitfähige Beschichtung beim Tiefziehen, oder bei jeglicher Art von Verformung bricht, splittert oder von der Folie abbröckelt. Durch die Kombination von metallisch oder metalloxidisch leitfähigen Beschichtungen mit organischen leitfähigen Beschichtungen (PEDOT/PSS, Baytron®, Polyaniline, Polythiophene, Polyacetylene) kann eine Verbesserung der Flexibilität erreicht werden. In einer weiteren vorteilhaften Ausführung werden zusätzliche leitfähige Nanomaterialien wie z.B. CNT's (carbon nanotubes) in die leitfähige Schicht eingearbeitet. Die Kombination der einzelnen leitfähigen Komponenten untereinander ist beliebig und in beliebigen Verhältnissen möglich.

In einer anderen Ausführungsform ist das Folienmaterial elektrisch leitend durch Einverleibung eines elektrisch leitenden Füllstoffs. Ein geeigneter Füllstoff ist beispielsweise Ruß.

Die elektrisch leitende, transparente Folie ist erfindungsgemäß vorteilhafterweise flexible und in einem herkömmlichen Prägeverfahren zur Beschriftung von Kennzeichenschildern plastisch verformbar.

Vorzugsweise umfasst das erfindungsgemäße prägfähiges Kennzeichenschild weiterhin eine retroreflektierende Folie, die gleichzeitig einen Schutz vor Beschädigung der Elektrodenanordnung bietet. Eine geeignete Folie ist dem Fachmann aus der Herstellung herkömmlicher Kennzeichenschilder bekannt.

Erfindungsgemäß umfasst die Platte und die elektrisch leitfähige transparente Folie Anschlüsse, mit denen das Kennzeichenschild an eine Spannungsquelle, insbesondere das Bordnetz eines Fahrzeugs oder eine autarke Spannungsquelle, angeschlossen werden kann.

Durch Anlegen einer Wechselspannung, vorzugsweise einer Spannung im Bereich von 50 V bis 300 V, an die als Elektroden dienende elektrisch leitfähige Platte und die elektrisch leitfähige transparente Folie, zwischen denen sich die gefüllte Haftklebemasse befindet, werden die elektrolumineszenzfähigen Zusätze einem elektrischen Wechselfeld ausgesetzt und so zum Leuchten angeregt.

Der vorstehend angegebene Spannungsbereich kann für bestimmte Anwendungsbereiche aber auch unter- oder überschritten werden. So kann es für sehr dünne Schichtdicken der Haftklebemasse beispielsweise vorteilhaft sein, mit geringeren Spannungswerten als 50 V eine für die Lumineszenz ausreichende Feldstärke zu erzeugen, während für besonders dicke Haftklebeschichten und aus der Haftklebemasse gebildete dreidimensionale Körper sehr hohe, also über 300 V liegende Spannungswerte von Vorteil sein können, um eine gewünschte Beleuchtungsstärke zu bedingen.

Das elektrische Wechselfeld zur Erzeugung der Lumineszenz weist vorteilhaft eine Frequenz von 40 Hz bis 3000 Hz auf, vorteilhafter zwischen 200 Hz und 2000 Hz, noch vorteilhafter zwischen 350 Hz und 1000 Hz. In einer weiteren vorteilhaften Vorgehensweise wird ein Wechselfeld mit 50 Hz gewählt. So kann beispielsweise bei 230 V / 50 Hz, also mit der in europäischen Stromnetzen üblichen Spannung und Frequenz, gearbeitet werden, um auf den Einsatz von Frequenzwandlern verzichten zu können. Eine weitere vorteilhafte, beispielhaft genannte Alternative ist die Wahl von 1 10 V / 60 Hz (US-amerikanisches Stromnetz).

Das erfindungsgemäße Verfahren zur Herstellung eines prägfähigen Kennzeichenschildes umfasst folgende Schritte:

    (a) Bereitstellen einer elektrisch leitenden Platte
    (b) Beschichtung der elektrisch leitenden Platte mit einer mit einem elektrolumineszenzfähigen Füllstoff gefüllten Haftklebemasse, und
    (c) Bedeckung der Haftklebemasse zumindest teilweise mit einer elektrisch leitfähigen transparenten Folie.

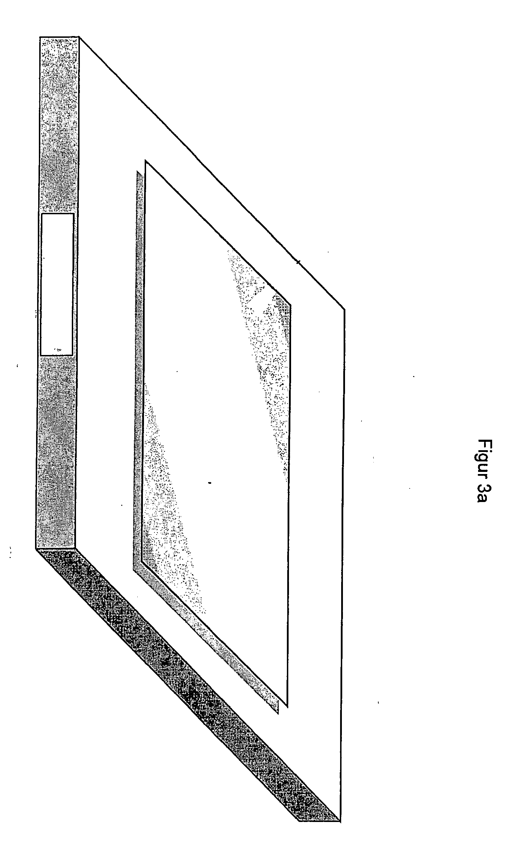

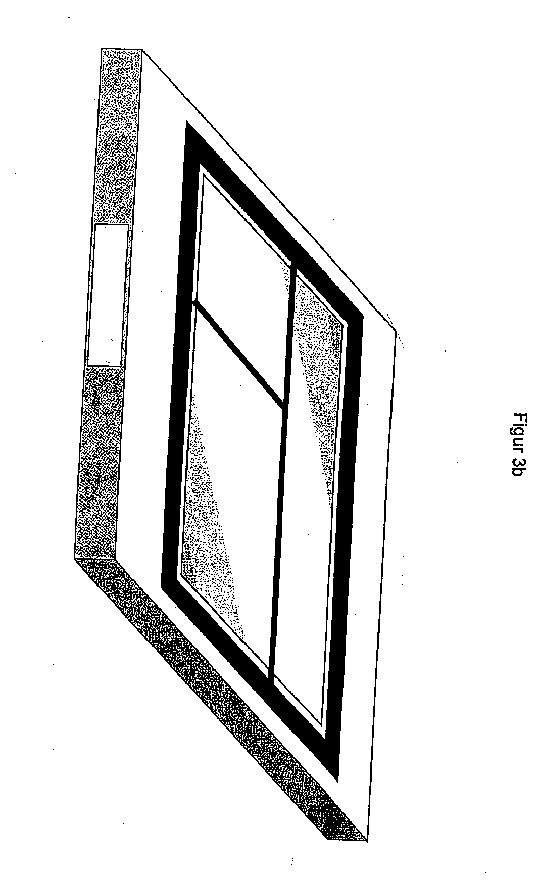

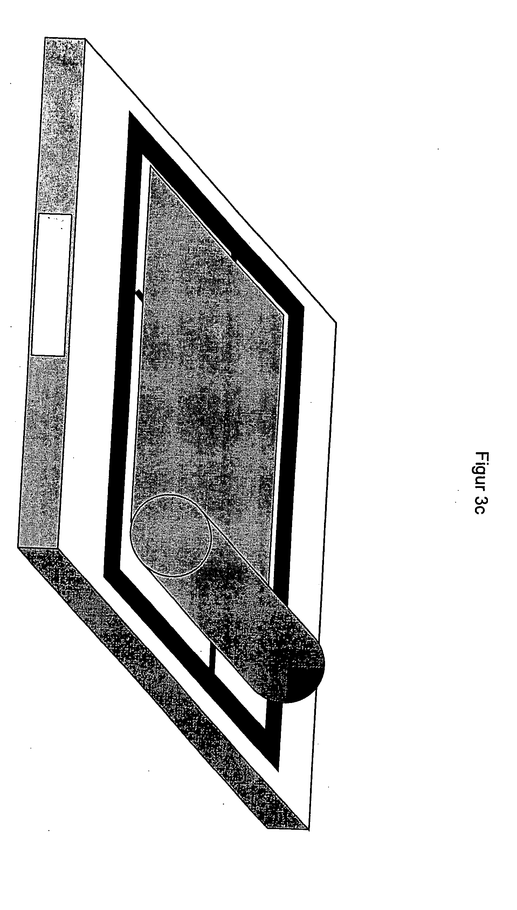

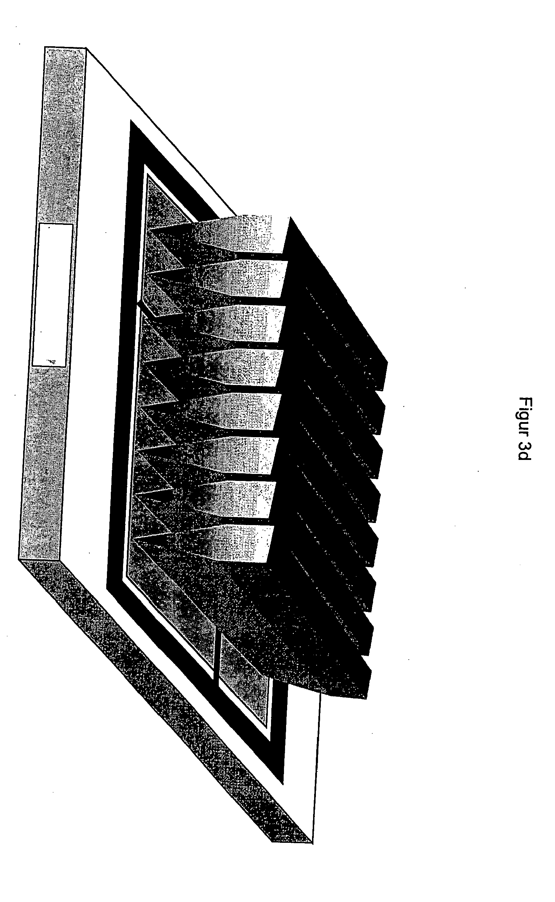

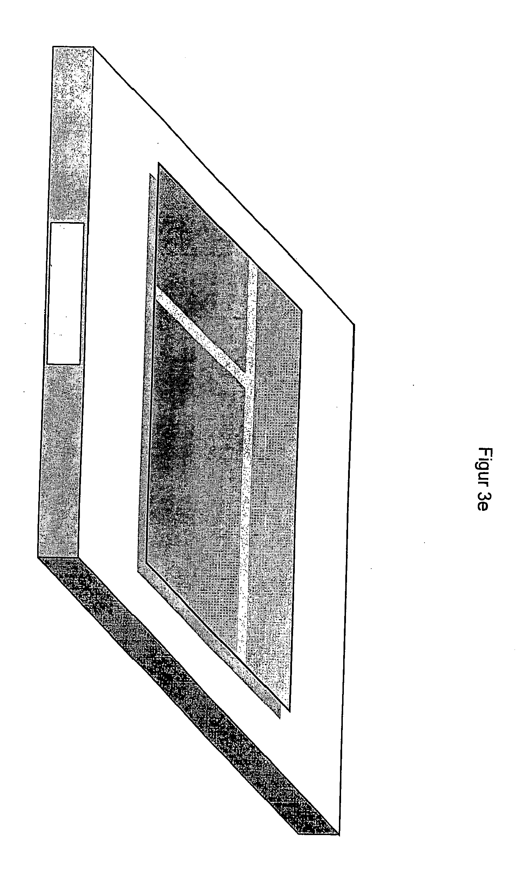

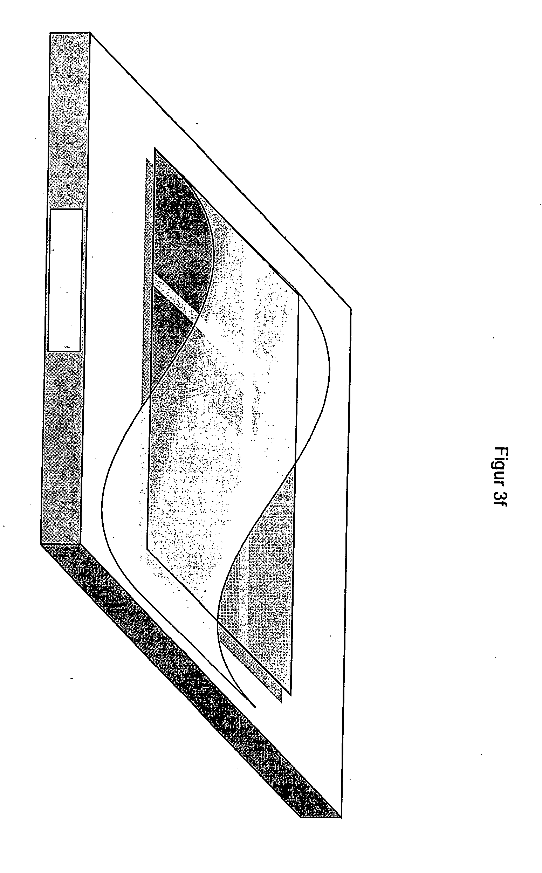

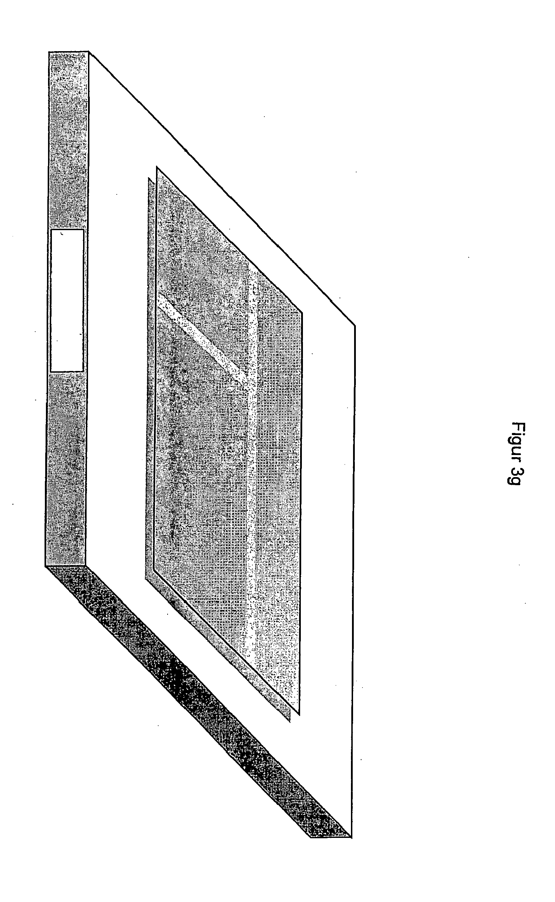

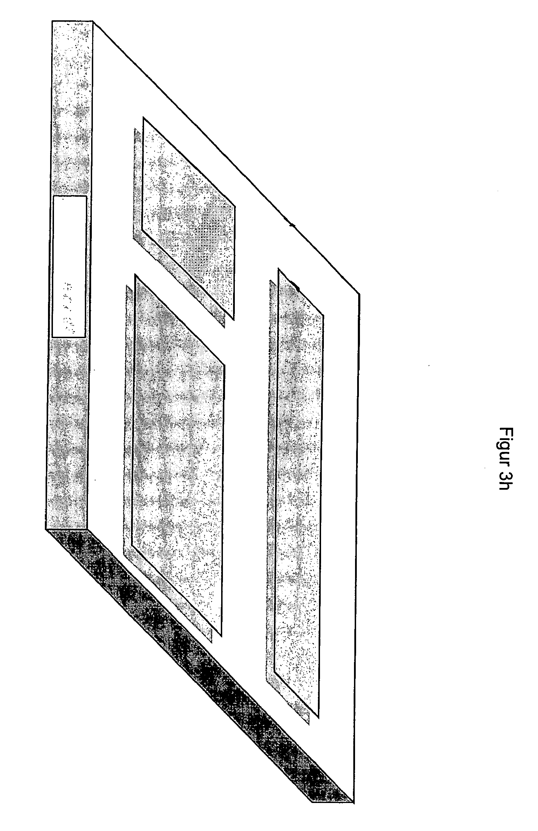

Figur 3a zeigt eine Ausführungsform des erfindungsgemäßen Verfahrens bei dem zunächst eine Aluminiumplatte bereitgestellt wird. Vorteilhafterweise umfasst die Platte eine isolierende Schutzschicht auf der später aufzubringenden Haftklebeschicht abgewandten Seite. In einer alternativen Ausführungsform kann die Platte auch endlos von einer Rolle dem Verfahren zugeführt werden. Die Platte wird in einem bevorzugten Schritt mit einer Maske bedeckt, die zur Kontaktierung der Platte geeignete Randbereiche definiert. In Figur 3b ist eine Maske dargestellt, die drei verschiedene Schilder mit unterschiedlichen Formaten definiert. In einem weiteren Schritt, wird eine Haftklebeschicht aufgebracht. Bei der Beschichtung der Platte kann einerseits eine Direktbeschichtung vorgenommen werden. Es ist aber auch denkbar eine Transferbeschichtung einzusetzen bei der durch Lamination die mit einem elektrolumineszenzfähigen Füllstoff gefüllten Haftklebemasse auf die elektrisch leitende Platte aufgebracht wird. In Figur 3c ist dargestellt, dass zu diesem Zweck eine spezielle mit dem Haftkleber beschichtete Folie eingesetzt wird. Anschließend wird die Beschichtung ausgehärtet. In Figur 3d wird schematisch eine Wärmebehandlung zur Aushärtung der Schicht gezeigt. Figur 3e zeigt die beschichtete Platte nachdem die Maske in einem nachfolgenden Schritt entfernt wurde. Anschließend wird die beschichtete Platte mit einer elektrisch leitfähigen Beschichtung versehen, die als Gegenelektrode dient. In Figur 3f wird eine Ausführungsform gezeigt, bei der es sich bei der Beschichtung um eine Folie handelt so dass eine mit einer Folie beschichtete Platte erhalten wird, wie dies in Figur 3g dargestellt wird. Wie in Figur 3h schematisch dargestellt kann nun die mit der Haftklebemasse und der Folie beschichtete Platte zurechtgeschnitten werden, um Kennzeichenschilder der Erfindung zu schaffen.

Die Erfindung wird im folgenden anhand von Beispielen näher erläutert. Zur weiteren Dokumentation der Erfindung wurden einige Probenmuster (auch: "Muster") hergestellt und untersucht, ohne sich durch die Wahl der Haftklebemassen und Probenparameter in der Erfindungsidee unnötig beschränken zu wollen.

**Beispiel 1**

Herstellung einer mit einem elektrolumineszenzfähigen Füllstoff gefüllten Haftklebemasse

Ein für radikalische Polymerisationen konventioneller 2-L-Glasreaktor wurde mit 20 g (5 Gew.-%) Acrylsäure, 80 g (20 Gew.-%) Methylacrylat und 300 g (75 Gew.-%) 2-Ethylhexylacrylat sowie 266 g Lösungsmittelgemisch [Aceton / Siedegrenzbenzin 60.95 / Isopropanol (47:50:3)] befüllt. Nachdem unter Rühren für 45 Minuten Stickstoffgas durch den Reaktionsansatz geleitet worden war, wurde der Reaktor auf eine Temperatur von 58 °C geheizt und 0,2 g 2,2'-Azobis(2-methylbutyronitril), Handelsname Vazo 67(TM), DuPont] hinzugegeben. Anschließend wurde das äußere Heizbad auf eine Temperatur von 75 °C erwärmt und die Reaktion konstant bei dieser Temperatur durchgeführt. Nach einer Stunde Reaktionszeit wurden weitere 0,2 g 2,2'-Azobis (2-methylbutyronitril) hinzugegeben. Nach 4 und 8 Stunden wurde jeweils mit weiteren 100 g des Lösemittelgemisches verdünnt. Zur Reduktion der Restinitiatoren wurden nach 8 und nach 10 Stunden jeweils 0,6 g Bis-(4-tert.-butylcyclohexanyl)-peroxydicarbonat [Handelsname: Perkadox 16(TM), Akzo Nobel] hinzugegeben. Die Reaktion wurde nach 24 Stunden abgebrochen und die Reaktionsmischung auf Raumtemperatur abgekühlt. Anschließend wurde das Polyacrylat mit 0,3 Gew.-% Aluminium-(III)-acetylacetonat (Zugabe als 3%ige Lösung in Aceton) abgemischt (Mengenanteilsangabe bezogen auf das Polymer).

Herstellung der mit Elektrolumineszenzpigmenten versehenen Haftklebemassen

Die wie vorstehend hergestellte Haftklebemasse wurde mit elektrolumineszierenden Pigmenten mit den folgenden Füllgraden (Mengenanteilsangaben bezogen auf die additivierte Haftklebemasse) vermischt.

- reine Basishaftklebemasse (Vergleichsprobe): Haftklebemasse H0
- 40 Gew.-% GlacierGLO® GG43: Haftklebemasse H1
- 50 Gew.-% GlacierGLO® GG43: Haftklebemasse H2
- 60 Gew.-% GlacierGLO® GG43: Haftklebemasse H3

GlacierGLO® GG43: Kupferaktiviertes Zinksulfid (Herstellerangabe: Zinc Sulfide : Copper activated; Zusammensetzung: Zinc Sulfide (CAS 1314-98-3) zu 92 bis 95 %; Aluminium Oxide Hydroxide (CAS 24623-77-6) zu 5 bis 8 %).

Zur Herstellung der Probenmuster für die einzelnen Messungen wurden die vorstehend beschriebenen Haftklebemassen H1 und H2 auf das entsprechende Substrat (Träger) mit einer Auftragsstärke von 42 µm beschichtet, getrocknet und bei 120 °C für 15 Minuten vernetzt.

Die offene Seite der elektrolumineszierenden Haftklebemasse wurde mit einer 175 µm dicken auf der zur Haftklebemasse hin weisenden Seite mit ITO beschichteten PET Folie abgedeckt. Nach Anlegen einer Sinusspannung von 100V und 400 Hz Frequenz an die beiden leitfähigen Folien wurde die Leuchtdichte der beiden Muster gemessen.

| Aufbau mit H1: | 5.77 | $cd/m^2$ |
|---|---|---|
| Aufbau mit H2: | 10.75 | $cd/m^2$ |
| Aufbau mit H3: | 13.97 | $cd/m^2$ |

**Beispiel 2**

Eine Beschichtung wurde wie in Beispiel 1 durchgeführt, jedoch nicht auf leitfähiger Folie, sondern auf silikonisierter Polyestertrennfolie 1. Abdeckung mit silikonisierter Polyestertrennfolie 2, wobei beide Silikonbeschichtungen eine abgestufte Klebkraft (Verhältnis ca. 1:2) zu der elektrolumineszierenden Haftklebemasse haben. In einem ersten Laminationsschritt wurde Trennfolie 2 abgezogen und die jetzt offene Haftklebemasse mit der leitfähigen Folie zukaschiert. Dann wurde Trennfolie 1 abgezogen und die ITO Folie wie aus erstem Beispiel in einem zweiten Laminationsschritt zukaschiert. Die Leuchtdichte wurde gemessen:

| Aufbau mit H1: | 5.53 | $cd/m^2$ |
| Aufbau mit H2: | 10.81 | $cd/m^2$ |
| Aufbau mit H3: | 14.20 | $cd/m^2$ |

Mit den oben bezeichneten Haftklebemasse können Kennzeichenschilder der Erfindung hergestellt werden, die mit herkömmlichen Prägemaschinen beschriftet werden können.

## Patentansprüche

1.   Prägfähiges Kennzeichenschild, umfassend eine elektrisch leitende Platte mit einer Beschichtung, die eine mit einem elektrolumineszenzfähigen Füllstoff gefüllte Haftklebemasse umfasst, die mit einer elektrisch leitfähigen transparenten Folie zumindest teilweise bedeckt ist, wobei die Platte und die elektrisch leitfähige transparente Folie zur Erzeugung von Elektrolumineszenz der gefüllten Haftklebemasse als Elektroden dienen können.

2.   Prägfähiges Kennzeichenschild nach Anspruch 1, das eine retroreflektierende Folie aufweist.

3.   Prägfähiges Kennzeichenschild nach einem der vorstehenden Ansprüche, wobei der elektrolumineszenzfähige Füllstoff verkapselt ist.

4.   Prägfähiges Kennzeichenschild nach einem der vorstehenden Ansprüche, wobei die Haftklebemasse vernetzt ist.

5.   Prägfähiges Kennzeichenschild nach einem der vorstehenden Ansprüche, wobei der elastische Anteil mindestens 40 % beträgt.

6.   Prägfähiges Kennzeichenschild nach einem der vorstehenden Ansprüche, wobei die Haftklebemasse ein Poly(meth)acrylat oder ein Silikon umfasst.

7.   Prägfähiges Kennzeichenschild nach einem der vorstehenden Ansprüche, wobei die Haftklebemasse bis zu 60 Gew.% elektrolumineszenzfähigen Füllstoff enthält.

8.   Prägfähiges Kennzeichenschild nach einem der vorstehenden Ansprüche, wobei der Haftklebemasse optische Aufheller beigemischt sind.

9.   Prägfähiges Kennzeichenschild nach einem der vorstehenden Ansprüche, wobei die elektrisch leitende Platte aus Aluminium oder einer Aluminiumlegierung besteht.

10.   Prägfähiges Kennzeichenschild nach einem der vorstehenden Ansprüche, **dadurch gekennzeichnet, dass** die Platte und die elektrisch leitfähige transparente Folie Anschlüsse aufweist, mit denen das Kennzeichenschild an eine Spannungsquelle angeschlossen werden kann.

11.   Verfahren zur Herstellung eines prägfähigen Kennzeichenschildes nach einem der Ansprüche 1 bis 10, das folgende Schritte umfasst:

(d) Bereitstellen einer elektrisch leitenden Platte
(e) Beschichtung der elektrisch leitenden Platte mit einer mit einem elektrolumineszenzfähigen Füllstoff gefüllten Haftklebemasse, und
(f) Bedeckung der Haftklebemasse zumindest teilweise mit einer elektrisch leitfähigen transparenten Folie.

12.   Verwendung eines prägfähigen Kennzeichenschildes nach einem der Ansprüche 1 bis 10 in einem herkömmlichen Verfahren zum Prägen eines Kennzeichens für ein Kraftfahrzeug.

Figur 1

Figur 2

Figur 3a

Figur 3b

Figur 3c

Figur 3d

Figur 3e

Figur 3f

Figur 3g

Figur 3h

Europäisches Patentamt
European Patent Office
Office européen des brevets

## EUROPÄISCHER RECHERCHENBERICHT

**Nummer der Anmeldung**

EP 08 01 7215

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 195 02 542 A1 (BOSCH GMBH ROBERT [DE]) 8. August 1996 (1996-08-08) * Anspruch 1; Abbildungen 1,2 * * Spalte 1, Zeile 64 - Spalte 4, Zeile 18 * | 1,6, 10-12 | INV. B60R13/10 G09F13/22 |
| Y | US 2005/120605 A1 (FITZKE MICHAEL [DE] ET AL) 9. Juni 2005 (2005-06-09) * Ansprüche 1,37; Abbildungen 1,2 * * Absätze [0001] - [0022] * | 1-12 | |
| Y | DE 10 2006 013834 A1 (TESA AG [DE]) 27. September 2007 (2007-09-27) * Ansprüche; Abbildungen 1,2 * | 1-12 | |
| A | GB 2 340 982 A (HENSHAW BERNARD ARTHUR [GB]) 1. März 2000 (2000-03-01) * Zusammenfassung; Ansprüche; Abbildungen * | 1,10-12 | |
| A | GB 816 710 A (PEARCE SIGNS LTD; JOHN HAROLD GEORGE PEARCE) 15. Juli 1959 (1959-07-15) * das ganze Dokument * | 1,6,9-12 | **RECHERCHIERTE SACHGEBIETE (IPC)** B60R G09F B60Q |
| A | US 2 981 858 A (O'CONNELL JAMES A) 25. April 1961 (1961-04-25) * das ganze Dokument * | 1-12 | H05B C09K E01F C09J |

Der vorliegende Recherchenbericht wurde für alle Patentansprüche erstellt

| Recherchenort | Abschlußdatum der Recherche | Prüfer |
|---|---|---|
| Den Haag | 10. Juli 2009 | D'Sylva, Christophe |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 08 01 7215

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-07-2009

| Im Recherchenbericht angeführtes Patentdokument | Datum der Veröffentlichung | Mitglied(er) der Patentfamilie | Datum der Veröffentlichung |
|---|---|---|---|
| DE 19502542 A1 | 08-08-1996 | WO 9623200 A1<br>EP 0805956 A1<br>ES 2166837 T3 | 01-08-1996<br>12-11-1997<br>01-05-2002 |
| US 2005120605 A1 | 09-06-2005 | AT 369268 T<br>CN 1625496 A<br>WO 03064210 A1<br>EP 1474312 A1<br>JP 2005515929 T | 15-08-2007<br>08-06-2005<br>07-08-2003<br>10-11-2004<br>02-06-2005 |
| DE 102006013834 A1 | 27-09-2007 | CN 101410472 A<br>EP 2001969 A1<br>WO 2007107591 A1<br>KR 20080111094 A | 15-04-2009<br>17-12-2008<br>27-09-2007<br>22-12-2008 |
| GB 2340982 A | 01-03-2000 | KEINE | |
| GB 816710 A | 15-07-1959 | KEINE | |
| US 2981858 A | 25-04-1961 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10247708
- EP 1863674 A
- DE 10129608 A1
- US 6765078 B2
- DE 10036901 A1
- US 20040092685 A1
- EP O824111 A1
- EP 826698 A1
- EP 824110 A1
- EP 841346 A1
- EP 850957 A1
- US 5945491 A
- US 5854364 A
- US 5789487 A

**In der Beschreibung aufgeführte Nicht-Patentliteratur**

- **Donatas Satas.** Handbook of Pressure Sensitive Adhesive Technology. 1989, 444-514
- **T.G. Fox.** *Bull. Am. Phys. Soc.,* 1956, vol. 1, 123